# EUROPEAN PATENT APPLICATION

(11) **EP 4 818 929 A1**
(43) Date of publication of application: **07.10.2026**
(21) Application number: 25189315.2
(22) Date of filing: 14.07.2025
(51) Int. Cl.: G06F 16/904

(54) **CONSOLIDATION AND SUMMARIZATION OF RELEVANT INFORMATION FROM HOME EVENT DATA**

(30) Priority: 31.03.2025 US 202563780874 P; 31.03.2025 US 202563780987 P
(71) Applicant: GOOGLE LLC, Mountain View CA 94043 (US)
(72) Inventor: Paiz, Ignacio Robles, Kent (US); Griffiths, Erin Rebecca, Stanta Clara (US); Cutbill, Adam, Menlo Park (US); Strods, Raymond Stepkans, Las Vegas (US)
(74) Representative: Maikowski & Ninnemann Patentanwälte Partnerschaft mbB

(57) **Abstract**

This document describes systems and techniques directed at consolidation and summarization of relevant information from home event data. Various examples are described herein, including a method, the method including receiving, by a machine-learned (ML) model, home data and generating, by the ML model, correlations based on the home data. The techniques further include generating, based on the correlations, a home summary including a text summary of a subset of the home data related to the correlations. The techniques may then generate a home output based on the home summary for output to a user. By so doing, users can get a better understanding of their homes through relevant and useful summaries of trends, patterns, and events happening within their homes.

## Description

### BACKGROUND

Home automation, surveillance, and monitoring devices and processes present a user with a variety of data. For example, a doorbell camera can show package deliveries, guests arriving, neighborhood animals, or passing cars. Not all data is relevant or useful to the user, however. In the example of video doorbell data, things like the comings and goings of neighborhood animals and passing cars may not be interesting or useful to the user. Some combinations of otherwise disparate data may be relevant, however, such as a weather report and an item left outside (e.g., a package left outside when the weather indicates it might rain). Thus, while these services can present a glut of data to the user, some of this data is useful, some of it is not, and some is useful when combined with other data.

### SUMMARY

Home Agent Summaries (referred to simply as "summaries") are created by generative artificial intelligence (GenAI) to discover interesting situations occurring at home. Summaries are the product of artificial intelligence (AI) analyzing raw events to parse information that is relevant for the user and useful. These summaries can come from discovered trends, anomalies in patterns, immediate dangers, rare events, and situations reported by users on their own.

Electronic devices can use, at least in part, a large language model (LLM) to generate summaries for a given situation. Agents (e.g., electronic devices) use LLMs to mimic reasoning, tools to interact with external software, memory to track past sessions, and reflection to verify their work, all in an attempt to accomplish a goal autonomously. Aside from improving quality by reasoning step-by-step, agents bring modularity, letting components change without needing to rebuild the full system. For example, when changing command syntax in the future, it would be preferable to reuse command ranking and selection logic and simply update the syntax generation step. Similarly, as new AI capabilities are added, it may be advantageous to immediately leverage it as a tool rather than make architectural changes.

This document describes systems and techniques directed at consolidation and summarization of relevant information from home event data. Various examples are described herein, including a method, the method including receiving, by a machine-learned (ML) model, home data generated by one or more home surveillance sensors and generating, by the ML model, one or more correlations based on the home data. The method further includes generating, by one or more processors and based on the one or more correlations, a home summary including a text summary of a subset of the home data related to the one or more correlations. The method further includes generating, by the one or more processors, a home output based on the home summary, the home output configured for output to a user.

Additionally, a device is disclosed, the device including one or more processors and a memory. The memory stores instructions that, when accessed by the one or more processors, cause the one or more processors to execute the method described. Additionally, a non-transitory, computer-readable medium is disclosed, the non-transitory, computer-readable medium storing instructions that, when accessed by one or more processors, cause the one or more processors to execute the method described. Additionally, a computer programming product is disclosed, the computer programming product including a memory. The memory stores instructions that, when accessed by one or more processors, cause the one or more processors to execute the method described.

This Summary is provided to introduce simplified concepts for consolidation and summarization of relevant information from home event data, which is further described below in the Detailed Description and is illustrated in the Drawings. This Summary is intended neither to identify essential features of the claimed subject matter nor for use in determining the scope of the claimed subject matter.

### BRIEF DESCRIPTION OF THE DRAWINGS

The details of one or more aspects of systems and techniques for consolidation and summarization of relevant information from home event data are described in this document with reference to the following drawings:
FIG. 1 illustrates an example home environment in which consolidation and summarization of relevant information from home event data can be implemented;
FIG. 2 illustrates an example user environment in which consolidation and summarization of relevant information from home event data can be implemented;
FIG. 3 illustrates an example user device in which consolidation and summarization of relevant information from home event data can be implemented;
FIG. 4 illustrates an example user interface (UI) in which consolidated and summarized relevant information from home event data can be displayed;
FIG. 5 illustrates an example implementation for consolidation and summarization of relevant information from home event data;
FIG. 6 illustrates an example of a machine-learning trainer for training an ML model, in accordance with one or more aspects of this disclosure;
FIG. 7 illustrates an example LLM trainer for consolidation and summarization of relevant information from home event data;
FIG. 8 illustrates an example of prompt engineering an LLM, in accordance with one or more aspects of this disclosure;
FIG. 9 illustrates an example of low-rank adaptation (LoRA) training for an LLM, in accordance with one or more aspects of this disclosure;
FIG. 10 illustrates an example method for consolidation and summarization of relevant information from home event data;
FIG. 11 illustrates another example method for consolidation and summarization of relevant information from home event data; and
FIG. 12 illustrates another example method for consolidation and summarization of relevant information from home event data.

The use of same numbers in different instances may indicate similar features or components.

### DETAILED DESCRIPTION

### Overview

This document describes systems and techniques directed at consolidation and summarization of relevant information from home event data. Various examples are described herein, including a method, the method including receiving, by a machine-learned (ML) model, home data and generating, by the ML model, correlations based on the home data. The techniques further include generating, based on the correlations, a home summary including a text summary of a subset of the home data related to the correlations. The techniques may then generate a home output based on the home summary for output to a user. By so doing, users can get a better understanding of their homes through relevant and useful summaries of trends, patterns, and events happening within their homes.

Home Agent Summaries (referred to simply as "summaries") are created by generative artificial intelligence (GenAI) to discover interesting situations occurring at home. Summaries are the product of AI analyzing raw events to parse information that is relevant for the user and useful. The sheer volume and disparate nature of these raw events present a significant challenge to users. Manually reviewing and analyzing this data to identify if there's anything they should pay special attention to is time-consuming, inefficient, and often impractical. Existing smart home systems primarily focus on providing these raw events, such as displaying raw event data or allowing users to set pre-defined rules based on simple triggers. These systems lack the capability to automatically and proactively analyze the complex interplay of raw events to generate higher-level summaries that leave out trivial information (e.g., "The weather is cloudy today") while highlighting important facts (e.g., "We detected an unfamiliar face picking up a package near the front door").

A platform for Home Agent Summaries may gather historical and current raw events from the user's home and may proactively offer a periodic summary of those events that is personalized for each user. Artificial intelligence (AI) models (e.g., an LLM-based model) can "humanize" these summaries, as opposed to simply presenting a list of events, and identify important summaries while discarding trivial events.

A device implementing consolidation and summarization of relevant information from home event data can reason and understand the near infinite space of home situations. By using an LLM Agent to reason about home situations, the device can handle situations that it has never seen before. It can also incorporate world knowledge, by training on the internet, to understand the relationship between issues and device capabilities. In aspects, summaries may help users get a better understanding of what's going on in their home, give users a sense that something is watching over their home for them, highlight the value that scaled events can deliver, make the summaries proactive so users don't have to ask for it, be a starting point for future searches, and/or learn on something simple like text before offering video summaries.

For example, the user can ask questions like "what happened over (time period)?", "is my home all good?", or "is there anything important to report?" One example goal for consolidation and summarization of relevant information from home event data can be to highlight trends about usage in different categories, causes for changes to those trends, or events that were abnormal to a typical time period. The user, in some examples, can have multiple categories of devices in their home. For example, summaries based on camera data can include package deliveries and handling (e.g., "a package was picked up by someone I don't recognize"), alarms that were heard or otherwise recorded (e.g., "two alarms were heard on Wednesday"), and/or facial recognition (or non-recognition) (e.g., "an unfamiliar face was seen in the backyard and usually is not"). Example summaries based on presence and/or occupancy data can include summaries like "you usually leave the house for work at 7:00am but were late on 1 out of 5 days this week", "the kids usually get home from school at 3pm but were early on Wednesday", and/or "sleep mode was enabled for 4 hours less this week than last week."

Additionally or alternately, summaries based on energy usage can include summaries like "6 manual temperature adjustments were made, 4 more than usual" and/or "the front door was open for 2 hours while the air conditioning ran yesterday." Summaries based on security may also include "the garage door was left open Wednesday night" and/or "the front door was unlocked Tuesday night." Further, summaries based on connectivity can include "the internet was out from 8pm to 11pm on Sunday night" or "your average download speed was 100 Mbps, which is 20% slower than usual." An example of a summary based on lighting of a home environment includes "the living room light was left on overnight on Thursday." Additionally or alternately, a summary based on entertainment (e.g., television, speakers) may include "you spent 12 hours watching TV last week, which is 2 hours more than average." In aspects, a summary based on home automations includes "Movie Night Routine was supposed to run but did not because the device could not be reached."

General queries can also be included. Consider a user input prompt (e.g., text input, voice input, etc.) of the form "what is the state of my house right now?" In addition to entry of the prompt, users can access this sort of information through an application (e.g., the Google Home App (GHA)), such as by viewing a Favorites or Device tab. Summaries from user queries may include summaries based on, but not limited to, camera data, occupancy data, energy usage, security, connectivity, lighting of a home environment, entertainment, home automations, and miscellaneous home data. For example, a security summary can alert a user that "the garage door is closed, the front door is locked, and the alarm is armed." In another example, a camera data summary can show a user the most recent events from their cameras in the last five minutes. In a further example, an energy usage summary can be "the HVAC is set to heat/cool at 62°F/82°F and is currently off as the indoor temperature is 68°F." Additional examples include device statuses or other information found to be relevant to the user.

In aspects, there can be a variety of methods for content selection. Examples can include, but are not limited to, event counts, ranking events (e.g., by count), filtering events, insight-based content, and nearest neighbor clustering. The event-counting method may provide a user a full count of all events that happened in their home. For example, if the user asks "how many events were detected in the past 12 hours?", this method can give the user an accurate summary of the count of events. The event-ranking method may allow a user to rank the home events based on importance and may be useful if an event is sufficiently rare. In an example, an alarm within the user's home going off would be of high importance, and this method would immediately alert the user with a summary of the alarm event. Similarly, the event-filtering method may allow a user to manually define events with a score or select important events based on the user's preference. A user may input that they care more about energy usage summaries than entertainment summaries or select that they want summaries only on security and occupancy data. Additionally, the insight-based method may give a user a summary about patterns or anomalies seen in the user's home. For example, the user receives a summary stating "I noticed that your average sleep time over the past week has dropped below six hours due to frequent late-night motion events." Further, the nearest neighbor clustering method can take events and cluster them to find which events are highly similar and which events are unique to a user. This method may give users summaries about events within the same category, like deliveries and visits, and summaries about events that are useful to only the user, like a surprise marriage proposal captured on an outdoor camera.

Summaries can be a variety of lengths, including, but not limited to, a singular sentence, a fragment, a multiple-sentence paragraph, and/or a list. An example of a longer summary for a user is:
"Good evening Chang family! Today was definitely a lively one. The morning routine got underway as expected, though the thermostat saw a slight bump, indicating someone was seeking extra warmth. The kids returned from school safely and seemed to relish some quiet time in their rooms. Nikky picked up two packages from the porch. Later, the kitchen was a hive of activity, preparing for what turned out to be a fantastic game night and guest dinner in the living room! As the evening wound down, the house settled into its nighttime routine, with lights dimming, doors locking, and the temperature adjusting for a comfortable sleep. A busy, but happy, day overall. By the way, here are some camera clips from game night that you may enjoy watching!"

A shorter example summary can be "Today, the landscaping crew installed several trees in the backyard, delivering them through the garage door around 10am. They worked for a couple hours before leaving around 1pm. Yazmine arrived around 2pm and brought inside several packages, leaving around 6pm." Even shorter examples can exist, such as "Trash was picked up as scheduled, and a FedEx package was delivered that Angela picked up, but otherwise a normal day."

In some examples, a summary can take the form of a list. For example:
·Miguel left for an hour in the morning at 7:00am and was home most of the day
·A delivery was made at 11:00am and Miguel brought it in
·Penelope visited for 5 minutes and picked up some clothes
·Angela left for work at 6:00am and got home at 2:00pm
·Hank ate his food normally at 3:00am and 3:00pm

### Operating Environment

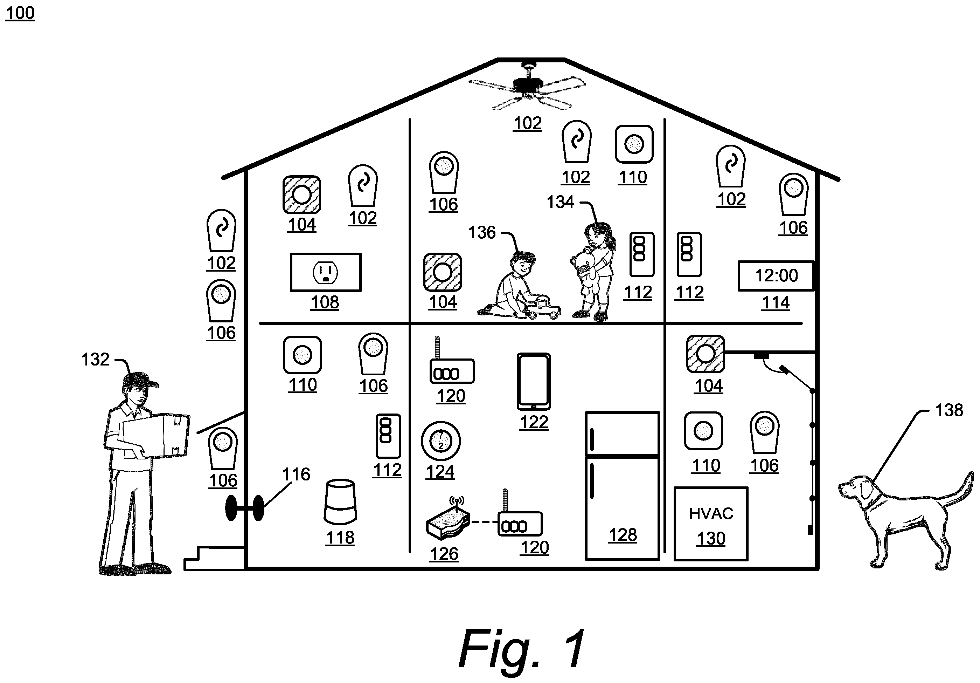

FIG. 1 illustrates an example smart home environment 100 in which consolidation and summarization of relevant information from home event data can be implemented. Generally, the home environment 100 includes a network (e.g. a home area network (HAN)) implemented as part of a home or other type of structure with any number of network-connected devices that are configured for communication in a wireless network. For example, the environment 100 includes smart fans 102, smart plugs 104, smart cameras 106, a smart outlet 108, smart home controllers 110, smart sensors 112, a smart alarm clock 114, a smart door lock system 116, a smart home hub device 118, border routers 120, a user device 122, a smart thermostat 124, an access point 126 (e.g., a smart networking device), a smart refrigerator 128, and a heating, ventilation, and air conditioning (HVAC) system 130. Any number of these network-connected devices can be implemented for wireless interconnection to wirelessly communicate and interact with each other. The network-connected devices may be modular, intelligent, multi-sensing, wireless devices that can integrate seamlessly with each other and/or a central server or system to provide any variety of useful implementations. The network-connected devices may also be configured to communicate via a network, which may include a wireless mesh network, a Wi-Fi^{™} network, or both.

The network-connected devices can further include, as non-limiting examples, hazard detectors (e.g., for smoke and/or carbon monoxide), cameras (e.g., indoor and outdoor), lighting units (e.g., indoor and outdoor), sensors and detectors (e.g., ambient light detectors, occupancy sensors, doorbells, and door lock systems), connected appliances and/or controlled systems (e.g., stoves, ovens, washers, dryers, air conditioners, pool heaters, irrigation systems, and security systems), electronic and computing devices (e.g., televisions, entertainment systems, computers, speakers, intercom systems, garage-door openers, ceiling fans, and control panels), and any other types of network-connected devices that are implemented inside and/or outside of a structure (e.g., in the home environment 100).

Consider a case where the home environment 100 includes a delivery person 132. The smart cameras 106 or the smart sensors 112 may identify that the delivery person 132 has arrived through facial recognition or from a proximity sensor. Home event data may include the identification of the delivery person 132, a lock status of the smart door lock system 116, and occupancy data indicating that a first child 134 and a second child 136 are inside the home environment 100. An example summary can be presented to a user (e.g., a parent outside the home) indicating that a door is not locked, the first child 134 and the second child 136 are home alone, and the delivery person 132 has arrived. This summary may be presented to the user periodically, automatically, or at the request of the user. In some examples, the summary is presented on the user device 122.

The home environment 100 may also include a dog 138. The dog 138 may have been left outside by the first child 134, and home event data may include identification of the dog 138, the outside temperature from an outdoor thermometer, and a duration of time the dog 138 has been outside based on smart camera 106 time stamps. An example summary can be presented to a user indicating that the dog 138 has been outside for 45 minutes, the current temperature is 92°F, and the first child 134 was last seen near the back door 40 minutes ago, prompting the user to text the first child 134 to let the dog 138 back into the home.

The home environment 100 may also include the smart alarm clock 114. The smart alarm clock 114 may be located in a user's bedroom, and home event data may include a sleep schedule derived from smart sensors 112, calendar data of the user, ambient light levels from a window-facing light detector, and tracking data from a wearable device (e.g., a smart watch). An example summary can indicate that the user went to bed later than usual, their calendar shows an early morning meeting, and that sunrise will occur earlier than normal due to a time change.

The home environment 100 may also include the smart refrigerator 128. The smart refrigerator 128 may track food inventory through weight sensors, and home event data may include a frequency of door openings, interior temperature levels, and product expiration data. A user may ask for a summary of their groceries and fridge use in the past day. An example summary may be presented to the user indicating that the milk is running low, the eggs are set to expire in two days, and the fridge door was opened 15 times in the past 24 hours.

The home environment 100 may also include the smart plug 104. The smart plug 104 may control power to various appliances (e.g., HVAC 130, the smart refrigerator 128), and home event data may include plug activation history, estimated energy usage, and time-of-day patterns. An example summary can indicate to a user that a space heater plugged into the smart plug 104 has remained on for five continuous hours and no motion or user presence was detected in a room. All of these example network-connected devices can provide data for use by the techniques to create summaries.

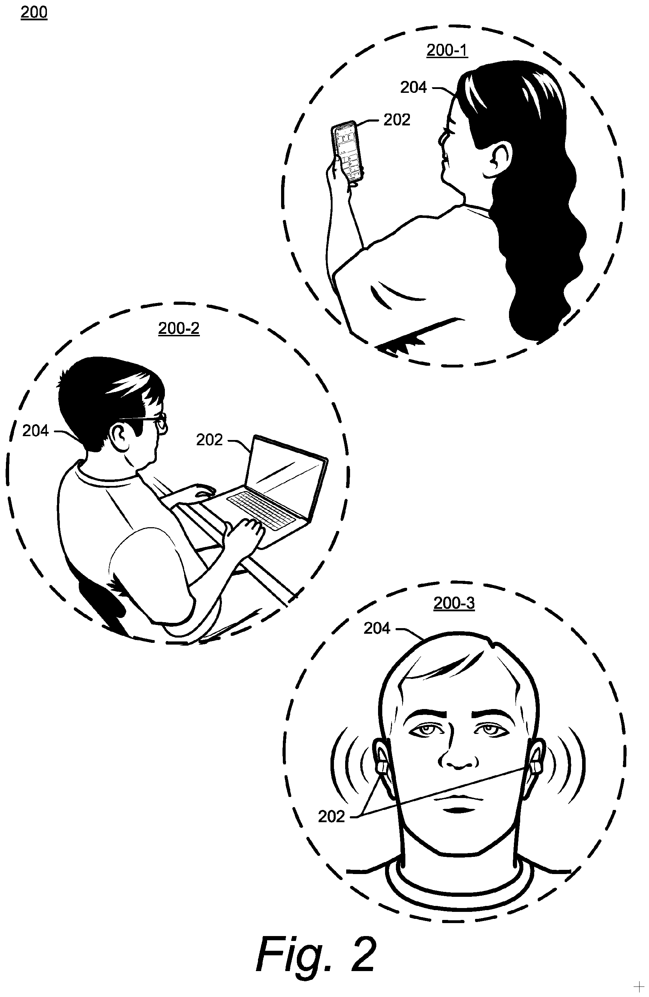

FIG. 2 illustrates an example user environment 200 in which consolidation and summarization of relevant information from home event data can be implemented. In a first example user environment 200-1, a user device 202 may be a mobile phone held by a user 204. In a second example user environment 200-2, the user device 202 may be a laptop in use by the user 204. In a third example user environment 200-3, the user device 202 may be wired earbuds in the ears of the user 204. The user device may have a summary agent located on a memory of the user device 202.

The summary agent can gather home event data (home graph devices, current device state, historical events, weather, etc.) from the data sources and can generate a home summary. The home summary may be a text summary of a subset of the home event data and may be generated based on correlations between the home event data. The home summary may be a historical summary or a real-time summary presented to the user 204 from the user device 202. In addition, the home summary may be proactively, automatically, or periodically presented to the user 204. The user 204 may also request a home summary through the summary agent on the user device 202.

As an example, consider the user 204 inputting a request for a home summary of their smart home (e.g., home environment 100 of FIG. 1) into their user device 202. The user 204 may inquire about important events that happened over the course of the week. The summary agent may collect data concerning house security, energy usage levels, appliance usage, occupancy, and habits. As a response, the summary agent may generate a home summary (e.g., historical summary) that is presented to the user 204 on their user device 202. The home summary may include that a package was delivered on Monday morning by an unfamiliar face, a laundry room smart plug detected unusually high energy usage from a dryer on Thursday afternoon, and living room lights stayed on overnight twice on Wednesday and Friday.

In another example, the user 204 can ask for a home summary of the current status of their home. The summary agent can generate a home summary (e.g., real-time summary) that is presented on the user device 202 for the user 204. The summary agent may collect current occupancy data, connectivity data, energy usage levels, and camera statuses. The home summary may include that two people are home, one person is away, the router is online with a download speed of 100 Mbps, six lights are on, and all cameras are online and fully charged. The summary agent may have also identified that a smart thermostat dropped 0.1°F in temperature and that a smart plug registered 0.002 kWh of power consumption. However, this information may not be relevant to the user 204, so the summary agent may exclude these findings from the home summary sent to the user 204.

The summary agent may identify information that is relevant to the user 204 and may allow the user 204 to provide feedback to further personalize relevant information. For example, the user 204 may ask for a home summary from the past 24 hours, and the summary agent may present to the user 204 that their bedroom window was open for two hours on Wednesday afternoon. The user 204 can provide feedback through giving a thumbs up or a thumbs down on the information in the home summary. If the user 204 lives in a city with poor air quality, the home summary about their open window may be important to the user 204, so the user 204 may give a thumbs up to the summary agent. However, the user 204 may frequently open their windows for ventilation and may not want home summaries about their window status, so this user 204 may give a thumbs down.

### Example Device

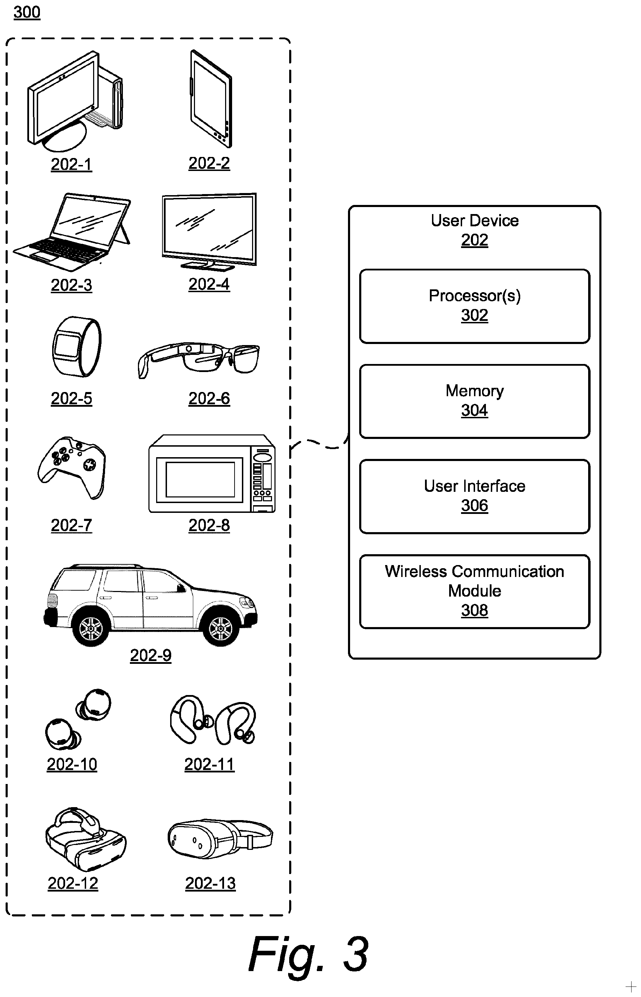

FIG. 3 illustrates the user device 202 in an example environment 300 in which consolidation and summarization of relevant information from home event data can be implemented. The user device 202 is illustrated with various non-limiting example devices, including a desktop computer 202-1, a tablet 202-2, a laptop 202-3, a television 202-4, a smart watch 202-5, smart glasses 202-6, a gaming system 202-7, a smart appliance 202-8, a vehicle 202-9, earbuds 202-10 (e.g., true-wireless earbuds, wired earbuds), hearing aids 202-11, a virtual-reality (VR) headset 202-12, and an augmented-reality (AR) headset 202-13. Other devices may also be used (e.g., a home service device, a smart speaker, a smart water monitor, a baby monitor, a Wi-Fi^{™} router, a drone, a trackpad, a drawing pad, a netbook, an e-reader, a home automation and control system, a wall display, or another home appliance). Note that the user device 202 can be wearable, non-wearable but mobile, or relatively immobile (e.g., desktops and appliances).

The user device 202 may include one or more processors 302 and a memory 304 (e.g., non-transitory computer-readable medium). In some examples, the memory 304 is part of a computer-programming product. The one or more processors 302 may include any suitable single-core or multi-core processor (e.g., an application processor (AP), a digital-signal processor (DSP), a central processing unit (CPU), a graphics processing unit (GPU)). The memory 304 can include memory media and/or non-transitory storage media. In aspects, the memory 304 includes the summary agent. An operating system (not shown) embodied as computer-readable instructions on the memory 304 can be executed by the one or more processors 302.

The user device 202 can additionally include a user interface 306. In some examples, the user interface 306 is a display in which the user device 202 can present home summaries (e.g., notifications) from home event data. The user device 202 may also include a wireless communication module 308 for communicating data over a wireless network. For example, the wireless communication module 308 communicates data over a wireless local-area network (WLAN), Bluetooth^{™}, a cellular network (e.g., 4G, 5G), a satellite communication network, a mesh network, the Internet, and the like.

### User Interface

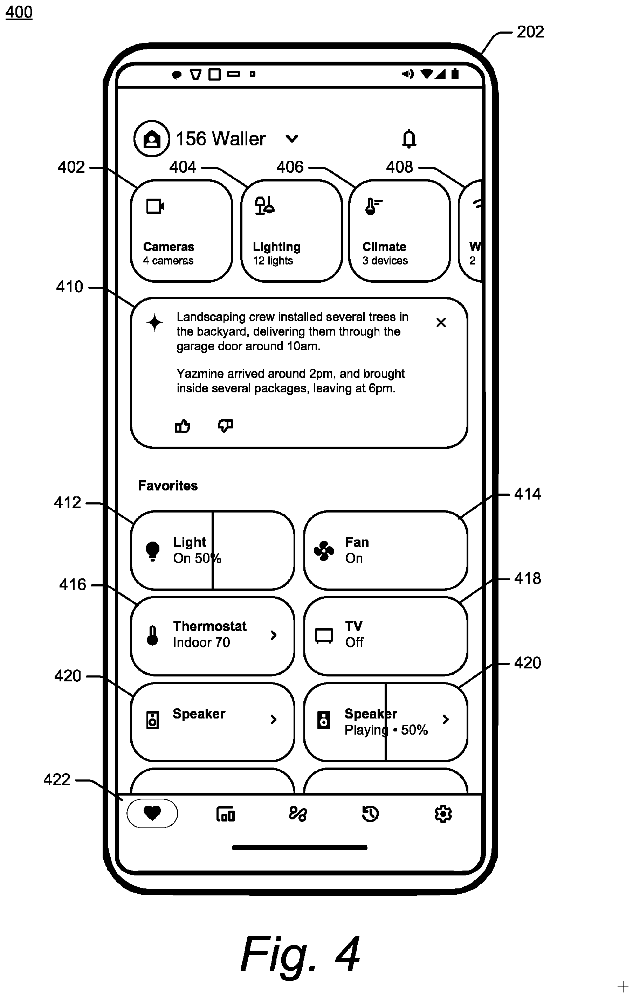

FIG. 4 illustrates an example user interface (UI) 400 of the user device 202 of FIG. 2. The user device 202 can display a number of network-connected devices on the UI 400, including cameras 402, lights 404, thermostats 406, and Wi-Fi^{™} routers 408. The user device 202 may present a home summary 410 on the UI 400, indicating important and relevant events from the day. The home summary 410 may be a push notification, a banner, an alert, or a message to a user (e.g., the user 204 of FIG. 2). The user device 202 can also present device statuses on the UI 400, including a light status 412, a fan status 414, a thermostat status 416, a TV status 418, and a speaker status 420. For example, a user can see that the light status 412 indicates that one of the lights 404 is at 50% brightness and the thermostat status 416 shows an indoor thermostat of the thermostats 406 at 70°F. The user may also navigate the UI 400 through a tab selection 422. In some examples, the tab selection 422 includes a favorites tab, a devices tab, an automations tab, an activity tab, and a settings tab.

Consider a case where a user is automatically given a daily summary of their home (e.g., home environment 100 of FIG. 1). The user device 202 may present the home summary 410 onto the UI 400 as a banner, indicating that landscapers were active in the backyard between 9:00am and 10:30am, a delivery person dropped off a package at the front door at 2:15pm, and the kids came home from school at 3:30pm. The home summary 410 may be useful to the user because these events may not be easily accessible in the UI 400 by using the tab selection 422. In aspects, the user can decide to provide feedback on the home summary 410 through a thumbs-up icon and a thumbs-down icon located on the UI 400. A thumbs-up from the user may reinforce that this type of summary is useful and appropriately scoped, while a thumbs-down may trigger refinement, such as omitting routine events or adding more specific details in future summaries. This feedback loop can enable ongoing prompt refinement and user-specific customization over time. In some examples, the user feedback is given on an application interface (e.g., GHA).

In other examples, the home summary 410 can be a home output. The home output may be an audio message and/or audio data related to the home summary 410 configured for output to a user. For example, a user receives their home summary 410 in the form of an audio message. The home environment 100 may be configured to deliver the audio message through a connected smart speaker and/or through the user device 202. Instead of reading the home summary 410 from the user device 202, the user can listen to the message. Similarly, the home output may be a home video accompanied by the home summary 410 configured for output to a user. For example, the user device 202 can present short video clips of an unfamiliar face detected by outdoor security cameras along with a summary stating that "an unfamiliar face was seen at 3:00am in the backyard and usually is not." The user can use the context from the home summary 410 and the video clips to determine if the unfamiliar face poses a security risk. In further examples, the home video can be images from two or more home surveillance sensors. The home surveillance sensors may include one or more of a smart doorbell, a smart door lock, a security camera, a motion sensor, a home hub, a wireless communication device, a smart thermostat, an alarm, a smart garage door opener, a smart smoke detector, a smart water monitor, a smart light, a smart plug, a smart switch, a smart appliance, a smart irrigation system, a smart speaker, a smart display, and a smart television.

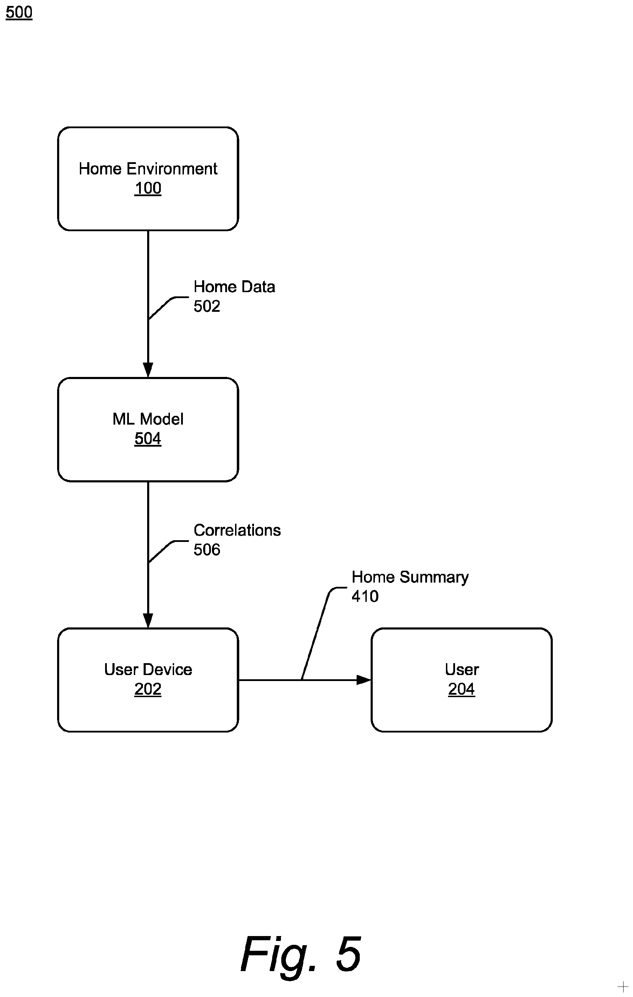

FIG. 5 illustrates an example implementation 500 in which consolidation and summarization of relevant information from home event data can be implemented. The home environment 100 of FIG. 1 is configured to output home data 502 (e.g., home event data) to a machine-learned (ML) model 504. The ML model 504 can output one or more correlations 506 to the user device 202 of FIG. 2. Based on the one or more correlations 506, the user device 202 outputs the home summary 410 of FIG. 4 to the user 204 of FIG. 2. In some examples, the one or more correlations 506 include one or more of a time correlation, an object detection correlation, an event correlation, a home device state correlation, a weather correlation, a pattern correlation, a historical correlation, a category correlation, and an energy usage correlation. For example, the one or more correlations 506 are between at least two or more different devices, and the one or more correlations 506 are time correlations (e.g., two seconds, one microsecond). The user device 202 may trigger the generation of the one or more correlations 506.

In aspects, the home data 502 is generated by one or more home surveillance sensors and the ML model 504 is stored in a memory (e.g., the memory 304 of FIG. 3) of a device (e.g., the user device 202). One or more processors (e.g., the one or more processors 302 of FIG. 3) may perform the generation of the home summary 410; in other examples, though, the ML model 504 may perform the generation of the home summary 410.

### Machine Learning

A machine-learned (ML) model, as discussed in this disclosure, refers to a computer model that has been trained using one or more machine-learning techniques. In general, this training may be done by providing training inputs to one or more training models, which in turn may provide an output. The output may be in the form of a prediction, a confidence score, or other probability-based metrics.

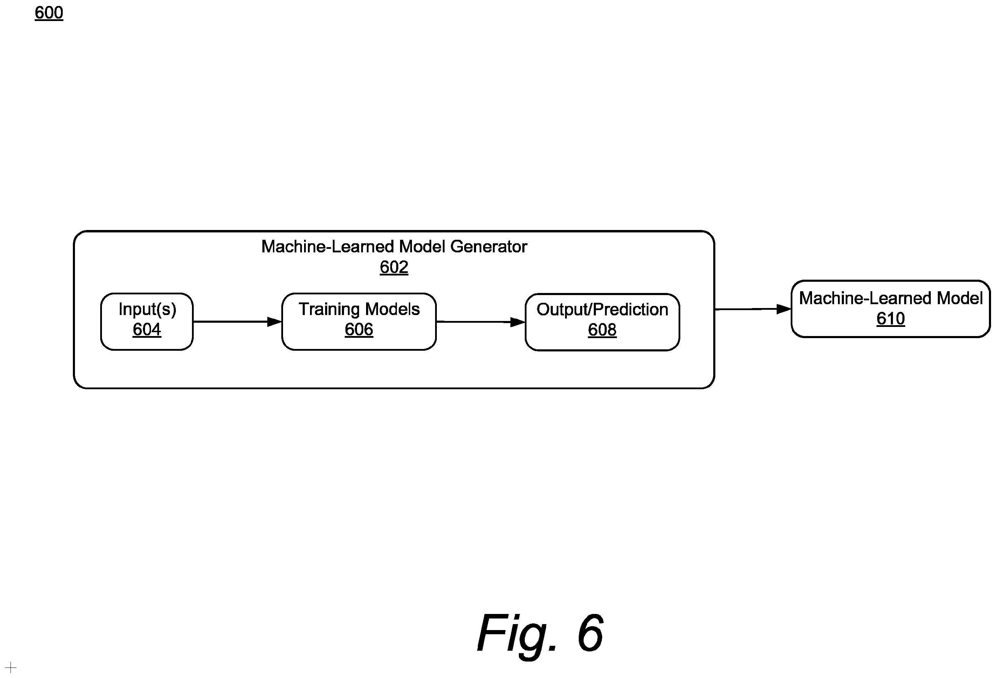

FIG. 6 illustrates an example of a machine-learning trainer 600 for training a machine-learned (ML) model, in accordance with one or more aspects of this disclosure. An ML model generator 602 may comprise training elements in the form of inputs 604, training models 606, and outputs 608 and may be used to generate an ML model 610. The inputs 604 may be training data. For example, the training data 604 can include smart device data such as an on/off status of an appliance, thermostat readings, motion sensor data, or a brightness of a smart light. The training data 604 may also include user behavior and preferences such as a daily thermostat schedule or a manual override of a light automation. In other examples, the training data 604 includes environmental data, contextual data, user history data, energy usage data, or event log data. The training data 604 may be processed by the training models 606. Examples of the training models 606 include multi-layer perceptron (MLP) models, convolutional neural networks (CNN), long short-term memory (LSTM) algorithms, generative adversarial networks (GAN), K-means clustering, Gaussian mixture models (GMM), or any other of a number of machine-learning training techniques known to a person of ordinary skill in the art. The training models 606 may comprise a single type of model or multiple types, as well as various combinations of types including combinations of single types and of multiple types.

The training models 606 may use supervised learning methods, where the training data 604 may be labeled and the outputs 608 may be graded based on their fidelity to a "truth" output. The training models 606 may use an unsupervised learning method, where there may not be labels on the training data 604 and the training models 606 may classify correlations without reference to a "truth" value. The training models 606 may combine supervised and unsupervised techniques. The input 604 may be from training data used to generate the ML model 610. The ML model 610 may be generated once the training of the ML model generator 602 is complete. The ML model 610 may be trained on a same device where the ML model 610 is stored or on at least one other device.

The ML model 610 may be trained to generate one or more correlations (e.g., the one or more correlations 506 of FIG. 5) based on home data (e.g., the home data 502 of FIG. 5). To generate the one or more correlations, the ML model 610 may generate one or more correlation values between two or more members of the home data (e.g., network-connected devices). The one or more correlation values may be based on a determined amount of correlation between the two or more members of the home data. By way of example, consider a smart motion sensor and a smart light. The smart motion sensor may have a high amount of correlation (e.g., similar correlation values) with the smart light due to the smart light automatically turning on when the smart motion sensor detects motion. In another example, consider a smart sprinkler system and a smart television. The smart sprinkler system and the smart television may have low correlation values to each other because the smart sprinkler system waters the lawn and the smart television handles media.

The ML model 610 may further compare the one or more correlation values to one or more threshold values. The one or more threshold values may be based on one or more of a data time, a data type, a data category, a data history, or a device type. The ML model 610 may also determine that at least two members of the home data exceed the one or more threshold values and may thereby generate a data subset including at the at least two members of the home data. The home summary may then be based on at least data for the two members identified in the data subset, thereby narrowing down the volume of incoming data generated by all network-connected devices 102-130 of FIG. 1. Indeed, by pairing at least two members of the home environment 100 through this correlation-based approach, the proposed solution limits the latency and disambiguate which data may need to be reported. Only events linked to data correlated between devices will be selected as candidate for the reporting. Hallucination is also avoided compared to a solution that would be trained over each individual sensor. By way of example, consider the dog 138 of FIG. 1 in the home environment 100 of FIG. 1. The dog 138 may have been left outside by the first child 134. The ML model 610 can generate correlation values between motion sensors in the house, outdoor cameras, and an outdoor thermometer. Further the ML model 610 can compare the correlation values against a time threshold for the dog 138 being outside (e.g., 15 minutes or less) and a history threshold for when the first child 134 deals with the dog 138 (e.g., the first child 134 keeps the dog 138 outside for 5 minutes). Based on the fact that the outdoor camera detected that the dog 138 was outside for 35 minutes, the outdoor temperature is currently 93°F, and the motion sensors inside the house indicate the presence of the first child 134, the ML model 610 can determine that the correlation values of all the devices exceed the threshold values. Based on this indication, the ML model 610 can generate a data subset (e.g., a summary) to be configured for output to a user. The example summary (e.g., home summary 410 of FIG. 4) may indicate to the user that the dog 138 has been outside for 35 minutes in 93°F heat.

According to some examples, the generation of the correlation values and/or the comparison of the correlation values to the threshold values can allow for scalability of the ML model 610 for new devices, such as devices on which the ML model 610 was not trained (e.g., abilities of the new devices not used in the inputs 604). By way of example, again consider the home environment 100, but with a new device of a smart awning. The ML model 610 may never have been trained on a smart awning, but the smart awning, in this example, can have a high correlation value with the outdoor camera (e.g., the correlation score based on proximity of the devices, a grouping from the user or automatic grouping, etc.). The example summary may further indicate to the user the status of the smart awning based on the correlation value of the smart awning and/or comparison of the correlation value of the smart awning with the one or more threshold values.

In some examples, the ML model 610 can compare correlation values between devices that do not exceed a threshold. Consider the example above, but the ML model 610 generates correlation values between indoor motion sensors, outdoor camera, the outdoor thermometer, and a fridge door sensor. The fridge door sensor may indicate that the fridge door was opened around the same time the outdoor camera identified the dog 138. However, the fridge door sensor does not exceed any threshold values and is either loosely correlated or not correlated at all with the other devices, thereby the ML model 610 does not include the door-opening event in the data subset. The summary delivered to the user includes relevant and helpful information.

According to some examples, the generation of the summary is based on one or more of the correlation values between devices, the comparison of the correlation values to the threshold values, action correlation values, and device threshold values. The device correlation values may be based on a determined amount of correlation between two or more of the available network-connected devices, categories of available actions of the network-connected devices, categories of the network-connected devices, data of the network-connected devices, historical data, etc. The device threshold values may be used as comparison values for the device correlation values, for the categories of the available actions, etc. For example, consider the previously outlined scenario of the dog being left outside. The proximity of the dog to the garage door, coupled with the available action of the garage door opening, can be given a high device correlation value and/or exceed a device threshold or device action threshold. By contrast, the refrigerator 128 of FIG. 1 may have a very low correlation value, device correlation value, etc., which may in addition not exceed the device threshold value. It should be noted that the use of such values (device correlation value, device threshold value, etc.) allows for robust scalability with new devices and/or new device actions, some of which the ML model 710 has not been trained on.

The ML model 610 may be updated with additional training after it has been initially trained. In aspects, the ML model 610 may have the same structure before and after training but may have one or more different values, such as starting vs. final values for weights and biases. In some examples, the ML model 610 may start with a different architecture prior to training, and in this way the generated ML model 610 may have architecture that is a product of the training done in the ML model generator 602.

By way of example, training for an ML model may be accomplished by incorporating an LSTM algorithm. The LSTM algorithm is a type of recurrent neural network (RNN), which may process data in a time-indexed fashion. The LSTM may solve a so-called "vanishing gradient problem," in which gradients used in fitting may tend to zero and, thus, may not yield useful fit parameters for a given model (e.g., weights and biases). During the training phase, the LSTM may allow for persistent gradients used to fit when the gradients may otherwise go to zero (e.g., in a traditional RNN). A person of ordinary skill in the art will understand that other configurations using the LSTM may also be equivalently used and that the example given here is meant to be illustrative and not limiting.

### Large Language Models (LLMs)

Generally, large language models (LLMs) are a class of AI. LLMs are trained on enormous amounts of data to provide foundational capabilities, which can be used and reused, often through fine-tuning for particular applications and tasks. Other software applications, in contrast, are often built and trained on specific data for each use case. In this way, LLMs are considered a type of foundational model.

Some LLMs use an ML model that can parse language and provide context-aware outputs, for example to mimic a human response. This mimicry of a human response is typically to a prompt (e.g., from a user asking a question). The prompt "ask how to get to the train station in French" can be used as a prompt by which an LLM provides a translation service (e.g., a response in the French language to the English language prompt).

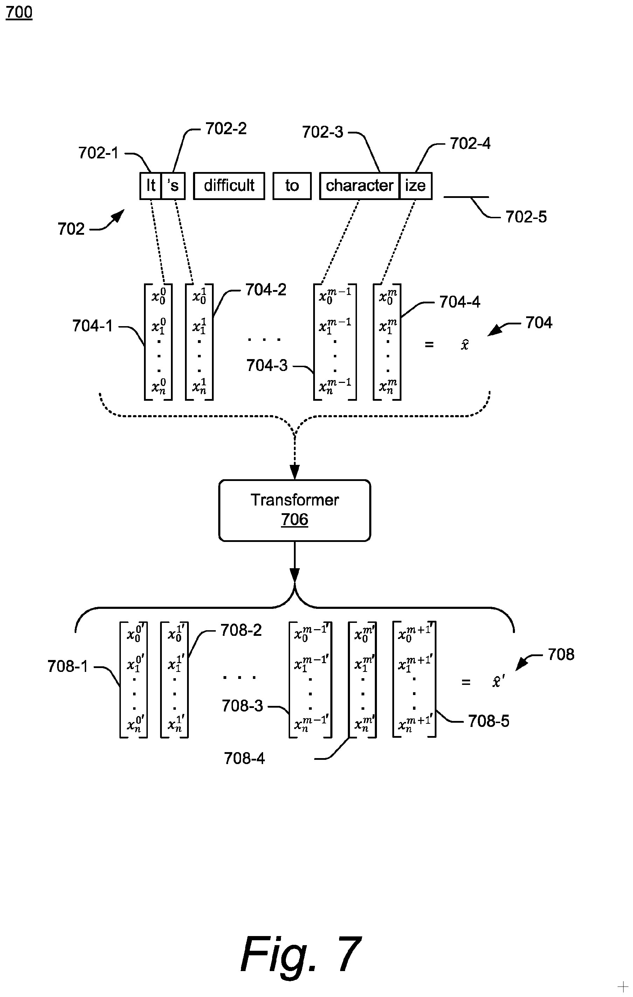

By way of example, consider FIG. 7, which illustrates a trainer 700 by which to train an LLM used for a system to consolidate and summarize relevant information from home event data. The trainer 700 receives training data as training inputs, such as an input 702. This training data may be of many different types, such as home event data. In the example illustrated by FIG. 7, the training input 702 is a phrase, though it may instead be a word, a long text passage (e.g., a book, article, or web-page), or any other data containing comprehensible text. In some examples, the text is from a screen or image capture. In a process called "tokenization," the trainer 700 breaks the training input 702 into tokens, marked as tokens 702-1, 702-2, 702-3, and 702-4. Here the training input 702 has a missing next word, marked as a blank 702-5. The goal of the trainer 700 is to predict the blank 702-5.

The trainer 700 encodes the tokens (702-1, 702-2, etc.) into an input tensor *x̂* 704 through a mapping procedure. For instance, the token "It" 702-1 is mapped to a first component 704-1 of the input tensor *x̂* 704, the token "'s" is mapped to a second component 704-2 of the input tensor *x̂* 704, the token "character" is mapped to a third component 704-3 of the input tensor *x̂* 704, and the token "ize" is mapped to a fourth component 704-4 of the input tensor *x̂* 704. Though the tokens "It" 704-1 and "'s" 704-2 are shown as two portions of the word "It's," other mapping schemes exist (e.g., a mapping based on discrete words or phonemes). In some instances, an ML model or an ML component of the trainer 700 performs the tokenization and/or mapping of the training input 702 into the input tensor *x̂* 704 (e.g., a feature-extracting CNN). The mapping of the tokenized training input 702 into the input tensor *x̂* 704 may involve a lookup table, which maps each possible token (e.g., 702-1, 702-2, etc.) to a known tensor object in a language space of the training data.

A transformer 706 takes the input tensor *x̂* 704 as an input, with the goal of predicting the blank 702-5 by transforming the input tensor *x̂* 704 into a transformed tensor *x̂*' 708. The transformation process is mathematically represented as follows: $T \hat{x} = \hat{x} ′$ Eq. 1

Tin Eq. 1 represents the transformer 706. The transformed tensor *x̂*' 708 includes components 708-1, 708-2, 708-3, 708-4, and 708-5. The component 708-1 is a transformation of the component 704-1 by the transformer 706 (similar for component pairs 708-2/704-2, 708-3/704-3, and 708-4/704-4). The component 708-5 corresponds to the blank 702-5, and thus the component 708-5 is a prediction for the blank 702-5. The final transformed tensor *x̂*' 708 component 708-5 is derived as part of the transformation process in addition to the contextualization of the components 704-1 through 704-4.

Inputs (e.g., the input tensor *x̂* 704 and/or the training input 702) generally include multiple tokens. For instance, the training input 702 includes the tokens 702-1 through 702-4. The trainer 700 converts a single training input (e.g., the training input 702) into multiple training inputs. For example, by removing the token 702-4, the blank 702-5 shifts left as the training input 702 calls for the trainer 700 to predict the token 702-4, thus creating a new training input from the original training input 702. As the value for the token 702-4 is known in this example, the new input is a labeled input, which allows it to be used by a supervised ML training algorithm (it should be noted that such an input is also able to be used by an unsupervised ML training algorithm). In this way, a single text containing multiple tokens (e.g., a book, a research paper, etc.) is used as multiple training inputs for the trainer 700.

In some instances, it is desirable to guide an output of an LLM without fine-tuning the LLM. A programmer may wish to add the functionality of an already-trained LLM to an application via an application programming interface (API) call, including all of the up-to-date functionality of the LLM with no additional training or upkeep needed from the programmer. In such instances, the only avenue to guide the output of the LLM is an input prompt. Tailoring the input prompt to obtain a desired output is known as prompt engineering.

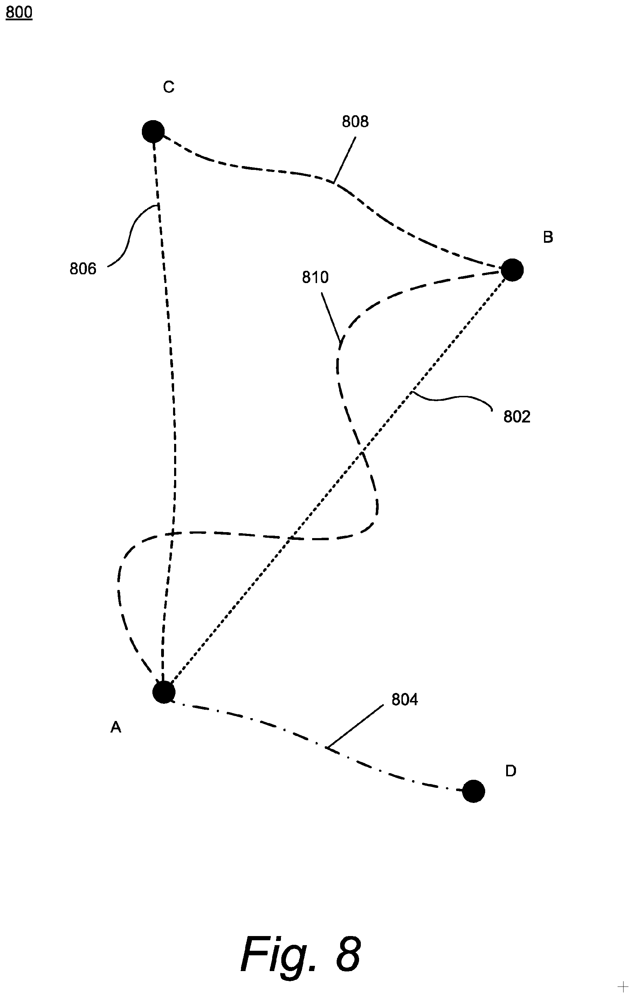

By way of example, consider FIG. 8, which illustrates a prompt engineering 800. An entry prompt A is an attempt to obtain a desired result B using an LLM. The LLM includes different computational avenues leading to results ("paths") based on a form of the entry prompt A. There may exist, at least in concept, an ideal path 802 leading from the entry prompt A to the desired result B in the most efficient manner possible. There are also other paths, such as a false path 804 leading to an undesired result D, an intermediate path 806 leading to an intermediary result C, another intermediate path 808 leading from the intermediate result C to the desired result B, and an inefficient path 810 leading from the entry prompt A to the desired result B. Many paths may exist, limited only by a scope of the LLM and a scope of the entry prompt A. The ideal path 802 may be expressed mathematically as follows: $S = \int L \left(φ,θ\left(φ\right),⋯\right) dφ$ Eq. 2

*S* in Eq. 2 represents the ideal path 802 and *L* represents the entry prompt A, which is characterized by a language space *φ* (e.g., the token 702-1 of FIG. 7) and a function *θ*(*φ*) for the path propagation in the language space *φ*. It may be difficult to distinguish the various paths 804-810 from the ideal path 802. In order to reach or reasonably approximate the ideal path 802, variations are made to the entry prompt L as follows: $\hat{S} = \int L \left(φ,θ\left(φ\right)+εη\left(φ\right)\right) dφ$ Eq. 3

*Ŝ* in Eq. 3 represents a path, which deviates from the ideal path 802 (S) by the function *η*(*φ*)*,* where *η*(*ε*) is characterized by the parameter *ε*. During the prompt engineering 800, various iterations of the entry prompt A are input into the LLM in an attempt to find an acceptable path. By way of example, a form of the entry prompt A does not reach the desired result B (e.g., the false path 804) and is discarded. In another example, another form of the entry prompt A gives the intermediate path 806, arriving at the intermediate result C, and a subsequent prompt gives the intermediate path 808 from the intermediate result C to the desired result B. Though this reaches the desired result B, multiple steps are taken, which is less efficient than a single, direct prompt. In another example, another form of the entry prompt A gives the inefficient path 810, which arrives at the desired result B. In another example, another form of the entry prompt A gives the ideal path 802 (or an acceptable approximation) to the desired result B. Characterization of variations in the form of the entry prompt A may be expressed mathematically as follows: $\frac{\partial \hat{S}}{\partial ε} \leq ψ$ Eq. 4

Eq. 4 illustrates the variation of a deviation $\frac{\partial \hat{S}}{\partial ε}$ of the path *Ŝ* by the parameter *ε*, with *ψ* being a maximum acceptable value. In an ideal scenario, for instance, *ψ* = 0. Consider an example where a user requests an application agent to give a current summary of the status of the user's home. The application agent may access the LLM and leverage the prompt engineering 800, having been trained with various forms of the input prompt A. Consider the prompt A having the form of "what is the status of my smart home?" Suppose the LLM responds by providing a list of every smart device ever connected to a home network, including offline or long-disconnected devices, with no indication of their current state or relevance. The user may have intended to receive a concise summary of currently active or important conditions, like whether doors are locked, the lights are off, or the HVAC is running. Instead, the LLM output may not be in line with the intent of the user in their entry of the prompt A. This example output from the LLM is represented by the undesired result D, which is not an acceptable path for the prompt engineering 800.

Consider another example of the above form of the prompt A, but now suppose there is a follow-up step in a training of the application agent by automatically entering another prompt of the form "summarize only the currently active and relevant smart devices and their statuses," resulting in the LLM filtering out offline devices and presenting a concise report highlighting important systems such as active security cameras, unlocked doors, lighting in occupied rooms, and the current HVAC setting. With the initial overwhelming list of all historical devices represented by the intermediate result C, the resultant summary is represented by the desired result B. This process is represented by the additive paths 806+808. Though the desired result B is reached, it is possible that the deviation $\frac{\partial \hat{S}}{\partial ε}$ is still above the maximum acceptable value *ψ*, which may be due to a computation cost, an inability to enter multiple prompts, or other limitations.

Consider an example of the entry prompt A for an application agent instantiated within a smart home control interface, with the entry prompt A having the form "anything important to report this past week?" Further consider the application agent parsing the entry prompt A, through training via prompt engineering 800, to have an updated form of "summarize notable smart home events from the past seven days, prioritizing security alerts, system malfunctions, and unusual patterns" (the updated entry prompt may be based on a knowledge of unsuccessful forms of the entry prompt A, forms of the entry prompt A used in prompt engineering in a training phase of the application agent, etc.). The LLM may return a list including every door opening, lighting change, and temperature fluctuation, even during routine and unremarkable timeframes, causing information overload and making it difficult for the user to discern anything truly important. The deviation $\frac{\partial \hat{S}}{\partial ε}$ may again exceed the maximum acceptable value *ψ*, which is illustrated by the inefficient path 810. In a similar example, suppose the entry prompt A is reformatted by the application agent to the form "summarize only high-priority smart home events from the last seven days, including security alerts, system errors, and deviations from normal energy use or occupancy patterns." The result may be a concise and insightful report highlighting a missed door lock event, a temporary HVAC failure, and an unexpected increase in evening energy use that provides the user awareness without overwhelming detail, which results in the deviation $\frac{\partial \hat{S}}{\partial ε}$ value falling at or under the maximum acceptable value *ψ*, which is represented by the ideal path 802.

Each of the forms of the entry prompt A in the previous several examples may be used to train the application agent to parse the entry prompt A in order to reformat it in a way aligned with an intent of the entry prompt A. The prompt engineering 800 leverages the failed paths from all of the forms of the entry prompt A to arrive at an acceptably efficient and succinct prompt, which results in the desired result B. In some examples, the parsing of the entry prompt A in order to determine the intent may be done by the LLM. The LLM may also be used in the prompt engineering 800 to generate additional forms of the entry prompt A, to find follow-up prompts, to classify intents, or to perform other aspects of the prompt engineering 800.

In some examples, prompt engineering can be used as part of an overall LLM manipulation scheme. Consider retrieval-augmented generation (RAG). In examples using RAG, the LLM is not fine-tuned, but prompt engineering is used to incorporate new data (e.g., data not used to train the LLM). Though RAG can incorporate other mechanisms (e.g., code for information retrieval or synthesis graphing), prompt engineering is an integral part of RAG. Throughout this disclosure, the idea of prompt engineering is meant to encompass LLM manipulation methodologies that do not fine-tune the LLM.

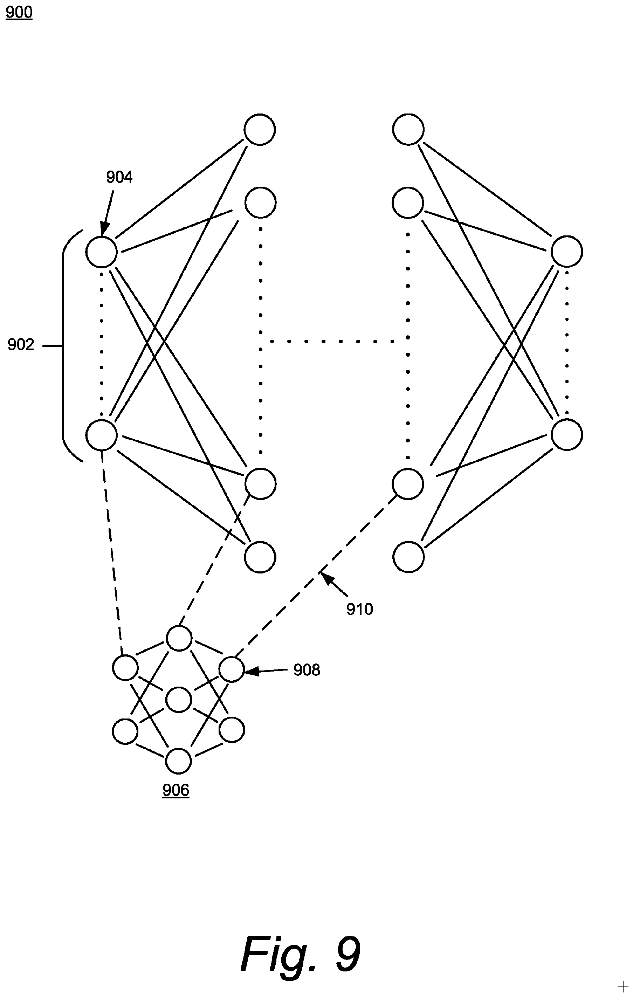

FIG. 9 illustrates an example low-rank adaptation (LoRA) training 900 for an LLM 902. The LoRA training 900 can be used to fine-tune the LLM 902. One advantage of the LoRA training 900 is that not all parameters 904 of the LLM 902 are tuned, resulting in a much less computationally costly training than fine-tuning all parameters 904 of the existing LLM 902. In some examples, a LoRA may be generated to tailor the LLM 902 to home automation and monitoring tasks, or a plurality of LoRAs can be generated, each for a specific home automation and/or monitoring application.

The LoRA training 900 employs a training ML model 906. The training ML model 906 has LoRA weights 908, which modify only some of the parameters 904 of the LLM 902 (indicated by dashed lines 910). The LLM 902 can be represented as a matrix of pre-trained weights (e.g., by the trainer 700 of FIG. 7) *W_{m,n},* where *m* and *n* represent the dimensionality of the matrix *W_{m,n}.* In a full fine-tuning (FT) training, the matrix *W_{m,n}* is modified by a modification matrix *Δw_{m,n}*, which is a matrix also of dimension *m* × *n*. In examples where the LLM 902 is large (e.g., hundreds of billions of parameters), the modification matrix *ΔW_{m,n}* is also large and can thus be intensive in both computational training resources and storage resources. In examples where multiple FT trained LLMs are sought, the problem is compounded.

The LoRA training 900 can greatly reduce the cost of the modification matrix *ΔW_{m,n}.* Consider the following equation: ${ΔW}_{m , n} = \left|{x}_{m , r}\right〉 \left〈{y}_{r , n}\right|$ Eq. 5

In Eq. 5, |*x_{m,r}*〉 is a matrix of dimension *m* × *r* and 〈*y_{r,n}*| is a matrix of dimension *r* × *n.* In the small limit, *r* = 1, making |*x_{m,r}*〉 and 〈*y_{r,n}*| contravariant and covariant vectors of rank 1, respectively. This can, in aspects, greatly reduce the dimensionality and thus the computational cost of fine-tuning compared with *ΔW_{m,n}* being stored and used as a dimensionality *m* × *n* matrix. Consider the LLM 902 represented by *W_{m,n}* with *m = n* = 445,000, giving 198,025,000,000 total parameters. Using the LoRA training 900, at the low end of *r* = 1, *ΔW_{m,n}* may be represented by two vectors, |*x_{m,r}*〉 and 〈*y_{r,n}*|*,* which have a dimension of only 445,000, resulting in a dimensionality reduction of: $\frac{\left[{ΔW}_{m , n}\right]}{\left[{W}_{m , n}\right]} ≅ 2.2472 ⋅ {10}^{- 6}$ Eq. 6

Eq. 6 shows an example of the modification matrix *ΔW_{m,n}* size being 0.00022472% the size of *W_{m,n}.* The result is, in some examples, an ability to FT train the LLM 902 with a relatively small set of parameters (e.g., the LoRA weights 908). In this way, FT LLMs based on the LLM 902 may be created. For example, if the LLM 902 is a general LLM for home management and the general LLM for home management is at least in part a product of the LoRA training 900, a plurality of specialized LLMs based on different aspects of home management can be easily stored on a user device (e.g., the user device 202 of FIG. 2). The specialized LLMs may include an appliance maintenance LLM that monitors smart device performance data, a routine automation LLM that personalizes and manages routines around the smart home, or a family coordination LLM that integrates calendar data across a household to manage household member schedules.

### Example Methods

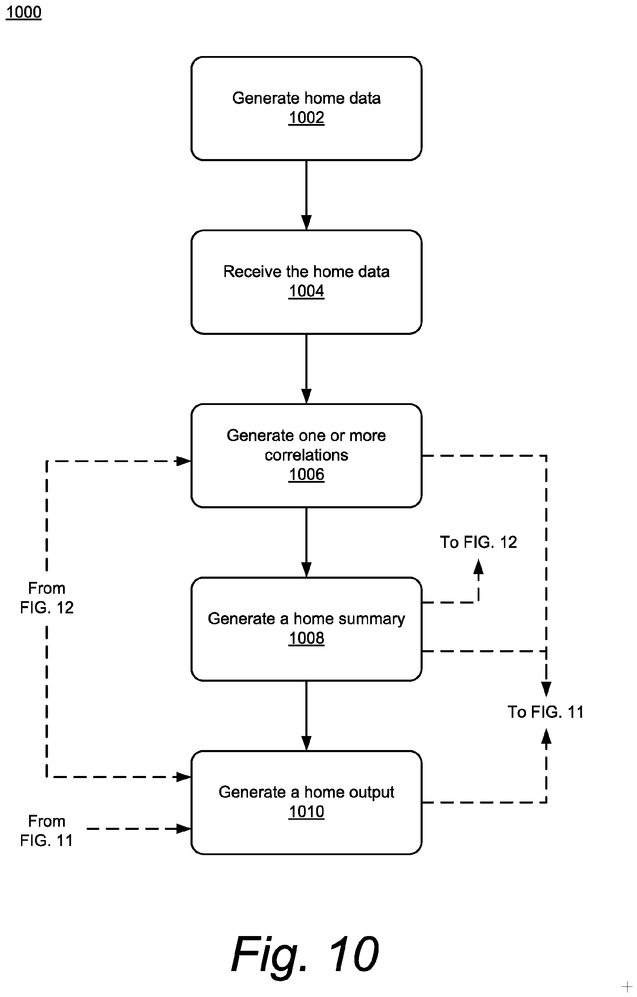

FIG. 10, 11**,** and 12 depict example methods 1000, 1100, and 1200, respectively, for consolidation and summarization of relevant information from home event data. The methods 1000, 1100, and 1200 are shown as a set of operations (or acts) performed but not necessarily limited to the order or combinations in which the operations are shown herein. Further, any of one or more of the operations may be repeated, combined, reorganized, or linked to provide a wide array of additional and/or alternate methods. In portions of the following discussion, reference may be made to the home environment 100 of FIG. 1 and entities detailed in FIGs. 1-9, reference to which is made for example only. The techniques are not limited to performance by one entity or multiple entities operating on one device.

FIG. 10 illustrates the example method 1000 for consolidation and summarization of relevant information from home event data. At 1002, home data (e.g., the home data 502 of FIG. 5) is generated by one or more home surveillance sensors. The one or more home surveillance sensors may include one or more of a smart doorbell, a smart door lock, a security camera, a motion sensor, a home hub, a wireless communication device, a smart thermostat, an alarm, a smart garage door opener, a smart smoke detector, a smart water monitor, a smart light, a smart plug, a smart switch, a smart appliance, a smart irrigation system, a smart speaker, a smart display, and a smart television. At 1004, the home data is received by an ML model (e.g., the ML model 610 of FIG. 6). In aspects, the ML model is an LLM (e.g., the LLM 902 of FIG. 9). The LLM may include one or more LoRA layers and may be trained, at least in part, using RAG. The ML model may also be stored in a memory (e.g., the memory 304 of FIG. 3) of a first device (e.g., the user device 202 of FIG. 2).

At 1006, one or more correlations (e.g., the one or more correlations 506 of FIG. 5) are generated by the ML model. The generation of the one or more correlations may be based on the home data. In examples, the one or more correlations include one or more of a time correlation, an object detection correlation, an event correlation, a home device state correlation, a weather correlation, a pattern correlation, a historical correlation, a category correlation, and an energy usage correlation. The generation of the one or more correlations may include one or more correlations between two or more of the home surveillance sensors. The ML model may further generate the one or more correlations through generating one or more correlation values between two or more members (e.g., devices) of the home data. The one or more correlation values may be based on a determined amount of correlation between the two or more members of the home data. The ML model may compare the one or more correlation values to one or more threshold values, which may be based on one or more of a data time, a data type, a data history, or a device type. If at least two of the two or more members of the home data exceed the one or more threshold values, the ML model can generate a data subset including the at least two of the two or more members of the home data.

At 1008, a home summary (e.g., the home summary 410 of FIG. 4) is generated. The home summary may include a text summary of a subset of the home data related to the one or more correlations. In some examples, the ML model generates the home summary, and in others, one or more processors (e.g., the one or more processors 302 of FIG. 3) generate the home summary. The one or more processors may be housed in a second device different than the first device, and the first device and second device may be in wireless communication. In some examples, the second device includes a mobile device (e.g., the user device 202 of FIG. 2) and the first device includes one of a cloud computer, a server, a home hub, or a wireless communication device. The generation of the home summary may be based on the one or more correlations and may be further based on one or more device capabilities of one or more of the home surveillance sensors. In some examples, the generated home summary includes a plurality of home summaries. The generation of the home summary is performed automatically or, in other examples, periodically. In some examples, the ML model generates the home summary based on the data subset from the one or more correlation values. Further, the generation of the home summary may include generating one or more event correlation values between two or more of the one or more home surveillance sensors and/or the home data. The one or more event correlation values may be based on a determined amount of correlation between the two or more devices and/or the home data. Additionally, at least one of the two or more devices and/or the home data is a new device and/or or new home data which the ML model has not been trained on. The generation of the home summary may be further based on a comparison of the one or more event correlation values with one or more event threshold values. In some aspects, the generation of the home summary is based on the event correlation values, and the ML model generates the event correlation values.

At 1010, a home output is generated based on the home summary. The home output may be configured for output to a user (e.g., the user 204 of FIG. 2), and the configuration of the home output may be based on a format of a UI element (e.g., the UI 400 of FIG. 4). In some examples, the UI element is a mobile device notification. The configuration of the home output for output to the user may also be performed by the ML model.

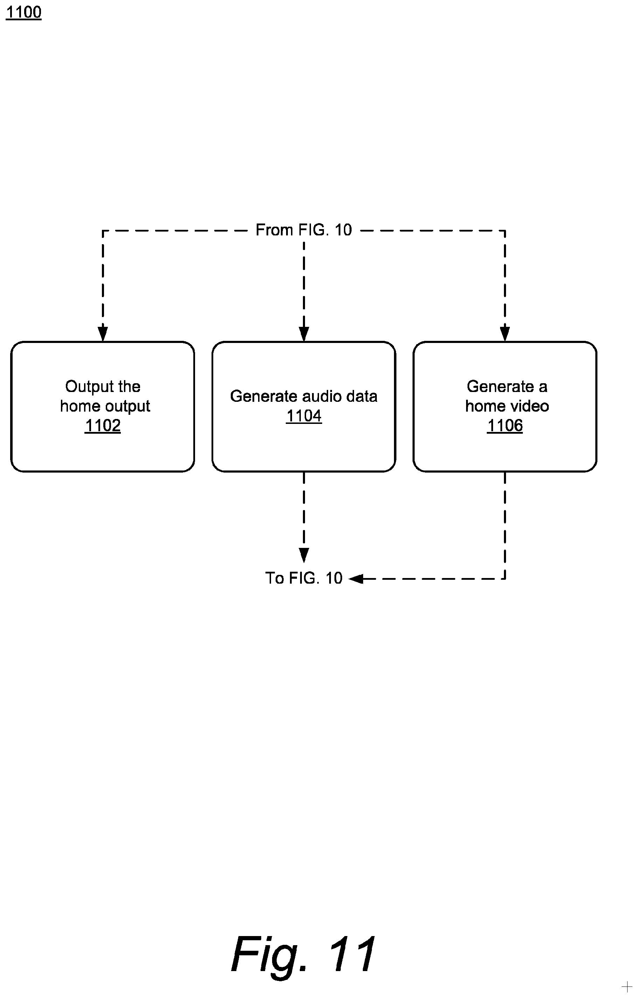

FIG. 11 illustrates the example method 1100 for consolidation and summarization of relevant information from home event data. The method 1100 includes the method 1000. At 1102, the home output is outputted to the user by the one or more processors. At 1104, audio data is generated. In aspects, the audio data includes a reading of the text summary of the subset of the home data related to the one or more correlations. The home output may further include the audio data. At 1106, a home video is generated based on the one or more correlations. The home output may further include the text summary and the home video. In aspects, the home video includes images from two or more of the one or more home surveillance sensors.

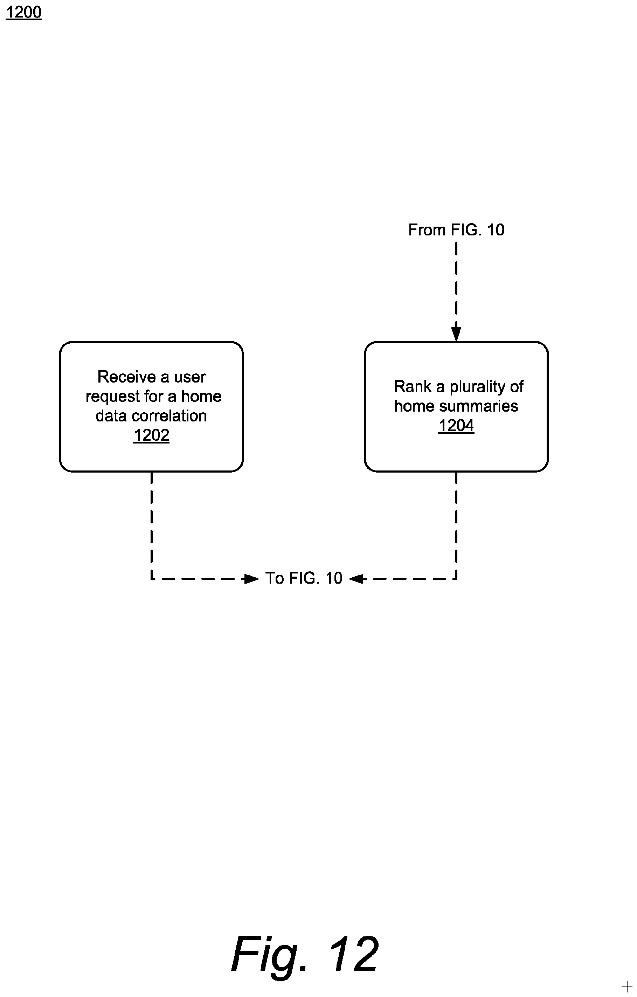

FIG. 12 illustrates the example method 1200 for consolidation and summarization of relevant information from home event data. The method 1200 includes the method 1000. At 1202, a user request for a home data correlation is received. In aspects, the generation of the one or more correlations (e.g., 1006 of FIG. 10) is responsive to the receipt of the user request for the home data correlation. At 1204, the generated home summary includes a plurality of home summaries, and the plurality of home summaries is ranked. In some examples, the ML model performs the ranking of the plurality of home summaries. The home output may be further based on the ranking of the plurality of home summaries.

### Additional Examples

Some additional examples are described below.

Example 1: A method for generating home data summaries, the method including receiving, by a machine-learned (ML) model, home data generated by one or more home surveillance sensors and generating, by the ML model, one or more correlations based on the home data. The method further includes generating, by one or more processors and based on the one or more correlations, a home summary including a text summary of a subset of the home data related to the one or more correlations and generating, by the one or more processors, a home output based on the home summary, the home output configured for output to a user.

Example 2: The method of example 1, where the generating, by the ML model, of the one or more correlations based on the home data includes generating, by the ML model, one or more correlation values between two or more members of the home data, the one or more correlation values based on a determined amount of correlation between the two or more members of the home data. The generating of the one or more correlations further includes comparing, by the ML model, the one or more correlation values to one or more threshold values, determining, by the ML model, at least two of the two or more members of the home data exceed the one or more threshold values, and generating a data subset, which includes the at least two of the two or more members of the home data.

Example 3: The method of example 2, further including generating the data subset of the home data based on the one or more correlation values between two or more members of the home data.

Example 4: The method of example 3, wherein the generating of the home summary is further based on the data subset of the home data.

Example 5: The method of any one of the previous examples, further including outputting, by the one or more processors, the home output to the user.

Example 6: The method of any one of the previous examples, where the configuration of the home output for output to the user is based on a format of a user interface (UI) element.

Example 7: The method of example 6, where the UI element includes a mobile device notification.

Example 8: The method of example 1, further including generating audio data. The audio data includes a reading of the text summary of the subset of the home data related to the one or more correlations, and the home output includes the audio data.

Example 9: The method of example 1, further including generating, based on the one or more correlations, a home video. The home output includes the text summary and the home video.

Example 10: The method of example 9, where the home video includes images from two or more of the one or more home surveillance sensors.

Example 11: The method of any one of the previous examples, where the one or more home surveillance sensors include one or more of a smart doorbell, a smart door lock, a security camera, a motion sensor, a home hub, a wireless communication device, a smart thermostat, an alarm, a smart garage door opener, a smart smoke detector, a smart water monitor, a smart light, a smart plug, a smart switch, a smart appliance, a smart irrigation system, a smart speaker, a smart display, and a smart television.

Example 12: The method of any one of the previous examples, where the generation of the home summary is performed by the ML model.

Example 13: The method of any one of the previous examples, where the configuration of the home output for output to the user is performed by the ML model.

Example 14: The method of any one of examples 1 to 11, where the generation of the home summary is performed by the one or more processors.

Example 15: The method of any one of the previous examples, where the generated one or more correlations include one or more of a time correlation, an object detection correlation, an event correlation, a home device state correlation, a weather correlation, a pattern correlation, a historical correlation, a category correlation, and an energy usage correlation.

Example 16: The method of any one of the previous examples, further including receiving a user request for a home data correlation. The generation of the one or more correlations is responsive to the receipt of the user request for the home data correlation.

Example 17: The method of any one of the previous examples, where the ML model is a large language model (LLM).

Example 18: The method of example 17, where the LLM includes one or more low-rank adaptation (LoRA) layers.

Example 19: The method of example 17, where the LLM is trained, at least in part, using retrieval-augmented generation (RAG).

Example 20: The method of any one of the previous examples, where the generated home summary includes a plurality of home summaries.

Example 21: The method of example 20, further including ranking the plurality of home summaries.

Example 22: The method of example 21, where the generation of the home output is further based on the ranking.

Example 23: The method of any one of the previous examples, where the generation of the home summary is performed automatically.

Example 24: The method of any one of the previous examples, where the generation of the home summary is performed periodically.

Example 25: The method of any one of the previous examples, where the ML model is stored in a memory of a first device and the one or more processors are housed in a second device, where the second device is different than the first device. The first device and the second device are in wireless communication with one another.

Example 26: The method of example 25, where the second device includes a mobile device, and the first device includes one of a cloud computer, a server, a home hub, or a wireless communication device.

Example 27: The method of any one of the previous examples, where the generating of the home summary includes generating one or more event correlation values between two or more of the one or more home surveillance sensors and/or the home data. The one or more event correlation values are based on a determined amount of correlation between the two or more devices and/or the home data.

Example 28: The method of example 27, further including comparing the one or more event correlation values with one or more event threshold values, where the generating of the home summary is further based on the comparison.

Example 29: The method of any one of examples 27 and 28, where the generation of the home summary is further based on the event correlation values.

Example 30: The method of any one of examples 27-29, where the event correlation values are generated by the ML model.

Example 31: The method of any one of examples 27-30, where at least one of the two or more devices and/or the home data is a new device and/or new home data, which the ML model has not been trained on.

Example 32: The method of any one of the previous examples, further including generating, by the ML model and from the one or more correlations, an insight. The insight includes new information derived from the correlations that highlights patterns, behaviors, or data not immediately evident from the home data. The home summary is generated based on the insight.

Example 33: An electronic device including one or more processors and a memory, the memory including instructions that, when accessed by the one or more processors, cause the one or more processors to perform the method of any one of examples 1-32.

Example 34: A non-transitory, computer-readable medium storing instructions that, when accessed by one or more processors, cause the one or more processors to perform the method of any one of examples 1-32.

Example 35: A computer programming product storing instructions that, when accessed by one or more processors, cause the one or more processors to perform the method of any one of examples 1-32.

### Conclusion

Although techniques using, and apparatuses including, consolidation and summarization of relevant information from home event data have been described in language specific to features and/or methods, it is to be understood that the subject of the appended claims is not necessarily limited to the specific features or methods described. Rather, the specific features and methods are disclosed as example implementations of consolidation and summarization of relevant information from home event data.

## Claims

1. A method for generating home data summaries, the method comprising:
receiving, by a machine-learned (ML) model, home data generated by one or more home surveillance sensors;
generating, by the ML model, one or more correlations based on the home data;
generating, by one or more processors and based on the one or more correlations, a home summary comprising a text summary of a subset of the home data related to the one or more correlations; and
generating, by the one or more processors, a home output based on the home summary, the home output configured for output to a user.

2. The method of claim 1, wherein the generating, by the ML model, of the one or more correlations based on the home data comprises:
generating, by the ML model, one or more correlation values between two or more members of the home data, the one or more correlation values based on a determined amount of correlation between the two or more members of the home data;
comparing, by the ML model, the one or more correlation values to one or more threshold values;
determining, by the ML model, at least two of the two or more members of the home data exceed the one or more threshold values; and
generating a data subset, which includes the at least two of the two or more members of the home data.

3. The method of any one of the previous claims, wherein the configuration of the home output for output to the user is based on a format of a user interface (UI) element.

4. The method of claim 3, wherein the UI element comprises a mobile device notification.

5. The method of any one of the previous claims, wherein the generation of the home summary is performed by the ML model.

6. The method of any one of the previous claims, wherein the configuration of the home output for output to the user is performed by the ML model.

7. The method of any one of the previous claims, wherein the generated one or more correlations comprise one or more of a time correlation, an object detection correlation, an event correlation, a home device state correlation, a weather correlation, a pattern correlation, a historical correlation, a category correlation, and an energy usage correlation.

8. The method of any one of the previous claims, wherein the ML model is a large language model (LLM).

9. The method of claim 8, wherein the LLM comprises one or more low-rank adaptation (LoRA) layers.

10. The method of any one of the previous claims, wherein the generated home summary comprises a plurality of home summaries.

11. The method of claim 10, further comprising ranking the plurality of home summaries.

12. The method of claim 11, wherein the home output is further based on the ranking.

13. The method of any one of the previous claims, further comprising generating, by the ML model and from the one or more correlations, an insight, wherein:
the insight comprises new information derived from the correlations that highlights patterns, behaviors, or data not immediately evident from the home data; and
the home summary is generated based on the insight.

14. An electronic device including one or more processors and a memory, the memory including instructions that, when accessed by the one or more processors, cause the one or more processors to perform the method of any one of claims 1-13.

15. A computer programming product storing instructions that, when accessed by one or more processors, cause the one or more processors to perform the method of any one of claims 1-13.
